Europäisches Patentamt

European Patent Office

Office européen des brevets

(19)

(11) Veröffentlichungsnummer: **0 004 999**
B1

(12) # EUROPÄISCHE PATENTSCHRIFT

(45) Veröffentlichungstag der Patentschrift:
12.05.82

(51) Int. Cl.³: **B 29 J 5/00,** D 21 J 3/00

(21) Anmeldenummer: **79200198.4**

(22) Anmeldetag: **20.04.79**

(54) Verfahren zur Herstellung von stark profilierten Formteilen.

(30) Priorität: **22.04.78 DE 2817699**

(43) Veröffentlichungstag der Anmeldung:
**31.10.79 Patentblatt 79/22**

(45) Bekanntmachung des Hinweises auf die Patenterteilung:
**12.05.82 Patentblatt 82/19**

(84) Benannte Vertragsstaaten:
**BE CH DE FR GB IT NL SE**

(56) Entgegenhaltungen:
**DE-C-742 849**
**DE-C-957 977**
**FR-A-2 342 843**

(73) Patentinhaber: **HOECHST AKTIENGESELLSCHAFT,**
**Postfach 80 03 20, D-6230 Frankfurt/Main 80 (DE)**

(72) Erfinder: **Teschner, Eckart, Am Sonnenhang 10,**
**D-6274 Hünstetten (DE)**
Erfinder: **Sattelmeyer, Richard, Dr., Nonnenwaldweg 20,**
**D-6229 Schlangenbad (DE)**
Erfinder: **Velde-Schwarz, Hartwig, Kant Strasse 5b,**
**D-6236 Eschborn (DE)**

## Verfahren zur Herstellung von stark profilierten Formteilen

Die Erfindung betrifft ein Verfahren gemäß dem Oberbegriff des Anspruchs 1.

Verformte Platten aus gebundenen Fasern, insbesondere Holzfasern, werden in großem Umfang für verschiedene Zwecke als Dekorplatten, zur Verkleidung von Bauteilen sowie im Automobilbau für Formteile für Verkleidungen und ähnliches verwendet. Die Fasern werden hierzu mit Kunstharzen gebunden und zu Vorfabrikaten in Form von Matten verarbeitet, die dann in einer zweiten Stufe zu den gewünschten Teilen verformt werden. Für den Einsatz bei der Verformung unterscheidet man einmal Vorfabrikate, die sich zu stärker verformten Elementen verarbeiten lassen, d. h. tiefziehfähige Platten, die, bezogen auf die ursprüngliche Materialebene, auf einem Abschnitt von beispielsweise 20 mm oder weniger bis zu 50 mm oder mehr punktuell verformt werden können und zum anderen solche, die keinen starken Verformungen unterworfen werden dürfen, da dabei zu starke Verdünnungen, die im Fertigteil zu mechanischer Instabilität führen, oder auch Risse im Material eintreten würden. Die Vorfabrikate werden im allgemeinen nach zwei verschiedenen Verfahren, das heißt, auf trockenem oder nassem Weg hergestellt, während für ihre anschließende Verformung nur ein einziges, gemeinsames Verfahren zur Verfügung steht.

Wenn die Herstellung der Vorfabrikate auf trockenem Wege erfolgt, werden die Fasern mit feingepulverten, härtbaren Phenolharzen (Novolaken) und geeigneten Härtern wie Hexamethylentetramin bestäubt. Zur Verbilligung kann ein Teil des Phenolharz-Härtergemisches auch durch preiswerte Naturharze wie Kolophonium, Wurzelharze oder ähnliches ersetzt werden. Das so vorbehandelte Material wird in beheizbare Pressen gegeben oder zwischen Siebbändern mit Warmluftbeheizung bei Temperaturen und Aushärtungszeiten, die noch nicht zu einer vollständigen Härtung des Phenolharzes führen, zu Matten von bis zu mehreren cm Stärke als Vorfabrikat geformt. Auf diese Weise werden tiefziehfähige Matten erhalten.

Ein Nachteil der nach dem Trocken-Verfahren erhaltenen Vorfabrikate ist die schlechte Lackierarbeit daraus hergestellter Formteile. Aus diesem Grund ist es erforderlich, die Oberfläche der Formteile bei dem gleichzeitig verlaufenden Formpress- und Härtungsprozeß durch ein gleichzeitig aufgepreßtes Spezialpapier zu vergüten, um eine gute Haftung sowie einen einwandfreien Verlauf von Lacken, insbesondere den dafür gewöhnlich eingesetzten Nitrolacken zu erhalten. Das verwendete Spezialpapier besteht aus einem resolharzimprägnierten Papier.

Im allgemeinen werden jedoch zur Herstellung verpreßbarer Fasermatten wäßrige, hitzehärtbare Phenol-Formaldehydharze, sogenannte Resole eingesetzt, die durch alkalische Kondensation von Phenol mit Formaldehyd in Molverhältnissen von 1 : 1.0 bis 1 : 1,2 erhalten werden. Diese Harze werden im sauren Medium z. B. durch Schwefelsäure oder Aluminiumsulfat auf die Holzfasern gefällt; das so erhaltene Material wird in Langsiebmaschinen grob entwässert und in Heizpressen bei 200°C vorverdichtet und weitgehend entwässert. Bei der Hitzebehandlung tritt eine teilweise bis weitgehende Härtung des Phenolharzes ein, wodurch die vorfabrizierten Matten eine für die Handhabung ausreichende Stabilität und Festigkeit erhalten. Ein Nachteil bei diesem Verfahren ist, daß die Vorfabrikate nur schwach getrocknet werden können, weil andernfalls das Phenolharzbindemittel zumindest teilweise während der Trocknung härtet und dadurch die Verformbarkeit verlorengeht. Der verbleibende unerwünschte Wassergehalt begünstigt aber bei der Lagerung einen mikrobiellen Befall und damit eine Fäulnis der Matten. Es kann daher keine längere Lagerung von auf Vorrat hergestellten Matten erfolgen. Ein weiterer, entscheidender Nachteil besteht darin, daß bei der folgenden Weiterverarbeitung, die in einer Behandlung mit Dampf, Verformen und anschließendem Härten durch Heißpressen besteht, die Teile nicht tiefgezogen werden können. Es ist lediglich möglich, Teile mit Verformungen von höchstens 5 mm, bezogen auf die ursprüngliche Ebene, auf einer Länge von 20 mm herzustellen, d. h. diese Matten sind nicht tiefziehfähig. Allerdings sind die daraus erhaltenen, nur gering profilierten Formteile aufgrund ihrer geschlossenen Oberfläche gut lackierbar. Als »Tiefziehbarkeit« oder »Tiefziehfähig« wird im allgemeinen die Eigenschaft angesehen, die eine Verformbarkeit auf einer Länge von 20 mm von mehr als 30 mm hervorruft. Verformungen unterhalb von 20 mm sieht der Fachmann nicht als »Tiefziehen« an.

Der Erfindung liegt die Aufgabe zugrunde, stark profilierte Formteile aus vorfabrizierten Matten im Naßverfahren herzustellen, die neben einer hohen Tiefziehfähigkeit auch ein einwandfreies Verhalten bei der Lagerung besitzen und aus denen zudem Formteile hergestellt werden können, die einwandfrei lackierbar sind.

Dies läßt sich bei einem Verfahren der eingangs genannten Art durch die im kennzeichnenden Teil des Anspruchs 1 aufgeführten Maßnahmen erreichen.

Bei diesem Verfahren werden die Phenol-Formaldehyd-Harze, die in Form ihrer wäßrigen, alkalischen Lösungen mit einem pH-Wert über 8 eingesetzt werden, mit Hilfe von Säuren oder sauer wirkenden Verbindungen auf die Fasern gefällt, die Masse, vorzugsweise in Langsiebmaschinen, zu Matten verarbeitet und nach einer Vorverdichtung, z. B. in einer Heizpresse, z. B. bis auf einen Wassergehalt von 15 bis 20% getrocknet. Die Trocknung wird anschließend, z. B. in einer Kammer mit Warmluftstrom, der im allgemeinen eine Temperatur von 40 bis 150°C, vorzugsweise 50 bis 90°C besitzt, bis auf einen Wassergehalt von unter 5% vervollständigt. In dieser Stufe erfolgt keine nennenswerte Härtung des Phenol-Formaldehyd-Harzes, da kein Härter für den Novolak zugegen ist. Durch die Verhinderung der Härtung erhält die Fasermatte die Tiefzieheigenschaften, die eine starke Verformung möglich machen.

Als Säuren, vorzugsweise in verdünnter Form, oder sauer wirkende Verbindungen, die zur Fällung der Harze auf die Fasern eingesetzt werden, eignen sich beispielsweise Salzsäure, Phosphorsäure, organische Säuren wie p-Toluolsulfonsäure, Aluminiumchlorid, vorzugsweise jedoch Schwefelsäure oder Aluminiumsulfat.

Die Herstellung der für das erfindungsgemäße Verfahren geeigneten Novolake erfolgt nach üblichen Methoden z. B. ohne Katalysator unter Anwendung von Druck, in Gegenwart von sauer wirkenden Verbindungen als Katalysatoren oder zweistufig unter Einsatz von alkalisch wirkenden Verbindungen in erster Stufe, gefolgt von der Umsetzung der erhaltenen Resole mit phenolischen Komponenten in Gegenwart saurer Verbindungen.

Als Phenolkomponenten für die Herstellung der Phenol-Formaldehyd-Harze, d. h. der Novolake, kommen die verschiedenen Kresole, Resorcin, aber insbesondere Phenol ($C_6H_5OH$), oder Gemische dieser Verbindungen in Frage. Formaldehyd wird z. B. in Form wäßriger Lösungen oder als Paraformaldehyd eingesetzt. Das Molverhältnis der Phenole zu Formaldehyd beträgt im allgemeinen 1 : 0,5 bis 1 : 0,95, vorzugsweise 1 : 0,7 bis 1 : 0,9.

Die Temperatur bei der Vorverdichtung in der Heizpresse beträgt im allgemeinen 160 bis 200°C, kann aber auch auf 300°C angehoben werden.

Die für die Härtung der Novolake erforderlichen Härter sind z. B. wäßrige Lösungen von Formaldehyd und insbesondere Formaldehyd abspaltende Verbindungen wie Trioxan, Paraformaldehyd, Hexamethylentetramin oder Hexamethylolmelamin.

Nach dem Auftrag des Härters auf die Vorfabrikate wird eine Behandlung mit Wärme und Feuchtigkeit durchgeführt. Hierzu eignet sich Dampf oder Heißluft, in die Wasser eingesprüht wird.

Die Verdichtung der tiefgezogenen Formstücke in die Endform und deren Härtung geschieht mit Hilfe von heizbaren Preßwerkzeugen, im allgemeinen bei Temperaturen von 150 bis 220, vorzugsweise 170 bis 200°C. Dabei wird der übliche Druck angewandt, wobei der optimale Druck auch von der eingesetzten Faserart abhängig ist. Bei Einsatz von Holzfaser wird im allgemeinen ein Druck von 2—5 N/mm², vorzugsweise 2,5—3,5 N/mm² empfohlen.

Die Verweilzeit der Formen in den Preßwerkzeugen richtet sich nach dem eingesetzten Harz und der angewandten Temperatur. Es muß eine für die Härtung ausreichende Zeitspanne gewährleistet sein. Diese beträgt vorzugsweise 20 bis 30 Sekunden.

Als Ausgangsmaterial für die Herstellung der Fasermatten dienen natürliche oder synthetische Fasermaterialien wie Stroh, Schilf, Cocosfasern, Sisal, Baumwolle, Polyester- und Polyamidfasern oder deren Gemische, insbesondere aber Holzfasern, die nach dem üblichen Prozeß (Schnitzeln, Kochen, Zerfasern) als Faser-Suspension eingesetzt werden.

Durch die erfindungsgemäß vorgesehene Entwässerung, die vorzugsweise in mehreren Stufen erfolgt, wird erreicht, daß die erhaltenen Vorfabrikate ohne eine Gefahr der Schimmel- und Fäulnisbildung auch längere Zeit gelagert werden können. Dies gilt vor allem für die besonders schimmel- und fäulnisanfälligen Produkte aus natürlichen Fasermaterialien. Auch die Gefahr der Selbstentzündung besteht nicht. Ihre Lagerfähigkeit beträgt bei Temperaturen unterhalb 50°C im allgemeinen mindestens 1 Jahr.

Außerdem haben die nach dem erfindungsgemäßen Verfahren hergestellten Matten den Vorteil, daß wegen der nicht eingetretenen Härtung des Harzes beim nachfolgenden Tiefziehen eine starke Verformung des Materials von beispielsweise 50 mm Tiefe auf einer Länge von 20 mm oder weniger möglich ist, ohne daß starke Verdünnungen oder auch Risse im Material auftreten. Die Oberfläche der profilierten Formteile ist einwandfrei lackierbar. Die Haftung und der Verlauf der eingesetzten Lacke, insbesondere der Nitrolacke, ist einwandfrei. Daher ist es möglich, Formteile mit dekorativer Oberfläche zu erhalten.

Die nach dem erfindungsgemäßen Verfahren hergestellten Formteile lassen sich für die bekannten Verwendungszwecke als Dekorplatten, Verkleidung von Bauteilen sowie im Automobilbau einsetzen.

Im Folgenden bedeutet T stets Gewichtsteile und % stets Gewichtsprozent.


Herstellung der Phenol-Formaldehyd-Harze


Harz A


1040 T Phenol werden bei 50°C geschmolzen, unter Rühren mit 24 T Natronlauge (25%ig) vermischt und auf 70°C erwärmt. Im Verlauf von 2 Stunden werden 941 T wäßriger Formaldehyd (40%ig) eingetragen. Der Absatz wird unter Rückflußkühlung weitere 2 Stunden bei 70°C gehalten. Anschließend werden 652 T Phenol und 16 T wäßrige Schwefelsäure (50%ig) langsam zugesetzt. Es wird auf 100°C geheizt und 40 Minuten bei dieser Temperatur gerührt. Hierauf wird auf 70°C abgekühlt, wäßrige Natronlauge (2632 T, 11%ig) zugegeben und weiter auf Normaltemperatur abgekühlt. Es werden 5345 T einer unbegrenzt mit Wasser verdünnbaren wäßrigen Harzlösung mit einem Festkörpergehalt von 40%, einem Gehalt an mit Säure fällbarem Harz von 33% und einer Viskosität von 400 mPa.s (20° C) erhalten.

## Harz B

470 T Phenol werden bei 60° C geschmolzen, unter Rühren mit 5T Oxalsäure versetzt und auf 90° C erwärmt. Im Verlauf von 90 Minuten werden dann 12 T Paraformaldehyd (91%ig) zugegeben. Die Temperatur wird durch Steuerung der Zugabegeschwindigkeit, Kühlwasserfluß und Heizung im Bereich von 95 bis 100° C gehalten. 30 Minuten nach Beendigung der Paraformaldehyd-Zugabe werden 200T wäßrige Natronlauge (40%ig) und 880 T Wasser langsam zugesetzt und der Ansatz auf Normaltemperatur abgekühlt.

Es werden 1675 T einer wäßrigen Harzlösung mit einer Viskosität von 340 mPa.s (20° C), einem Festkörpergehalt von 36%, einem Gehalt an säurefällbarem Harz von 30% und unbegrenzter Wasserlöslichkeit erhalten.

## Harz C (Vergleich)

1200 T Phenol werden bei 50° C geschmolzen, unter Rühren mit 700 T Natronlauge (40%ig) gemischt und auf 60° C erwärmt. Anschließend werden 1900 T wäßriger Formaldehyd (30%ig) im Verlauf von 3 Stunden eingetragen, wobei die Temperatur auf 70° C ansteigt. Nach einer Verweilzeit von einer Stunde bei 70° C beträgt die Viskosität des Ansatzes 350 mPa.s (20° C), der Festkörpergehalt 40% und der Gehalt an mit Säure fällbarem Harz 31%.

## Harz D (Vergleich)

1000 T Phenol werden bei 50° C aufgeschmolzen, mit 5T Schwefelsäure (15%ig) gemischt und auf etwa 80° C erhitzt. Anschließend werden unter Rückflußabkühlung im Verlauf von 1,5 Stunden 850 T wäßriger Formaldehyd (30%ig) eingetragen, wobei die Temperatur auf etwa 95° C ansteigt. Der Ansatz wird bei dieser Temperatur gehalten, bis der Formaldehydanteil unter 3% liegt. Hierauf wird das Wasser abdestilliert, wobei die Temperatur von 100° C im Verlauf von etwa 1 Stunde auf 130° C ansteigt. Die Destillation wird abgebrochen, wenn die Viskosität des Novolakes bei 20° C, in Äthylenglykolmonoäthyläther 1 : 1 gelöst, 900 mPa.s überschreitet. Schmelzpunkt des Novolakes 67° C.

450 T des erhaltenen Novolakes werden mit 40 T Hexamethylentetramin und 600 T Wurzelharz (Schmelzpunkt 74° C) zu einem Pulver mit einer Hauptkornfraktion von 40 bis 60 μm vermahlen.

Die Harzlösungen A und B werden zur Herstellung der Fasermatten gemäß der Erfindung eingesetzt, und die Harze C (Phenolresol) und D (pulverförmige Novolak) als Vergleich herangezogen.

## Beispiel 1

Zu 100 T einer in üblicher Weise durch Schnitzeln, Kochen und Zerfasern hergestellten Holzfaser-Suspension mit einem Trockenfasergehalt von 0,7%, bezogen auf das Gewicht des Gesamtsystems, werden 18 T einer Harzlösung aus 10 T Phenolharz A) und 1350 T Wasser gegeben. Nach gründlichem Vermischen wird der pH-Wert der Suspension mit Schwefelsäure auf 3,5 gesenkt, so daß das Phenolharz nahezu vollständig auf der Holzfaser gefällt wird. Der Faserbrei wird anschließend auf einem Langsiebband grob entwässert und dabei zu vliesartigen Matten von 2 bis 3 cm Stärke verarbeitet, die in entsprechenden Stücken in einer auf 200° C beheizten Presse auf eine Stärke von 8 bis 10 mm verdichtet und gleichzeitig auf einen Wassergehalt von 15 bis 20%, bezogen auf das Gewicht der Matte, getrocknet werden. Die Trocknung wird anschließend in einer Warmluftstrom-Kammer bei 85° C bis auf einen Wassergehalt unter 5% vervollständigt. Die hergestellten Vorfabrikate lassen sich ohne Gefahr der Selbstentzündung sofort stapeln; ebenso ist die Gefahr mikrobieller Zerstörung ausgeschlossen. Ihre Lagerstabilität beträgt bei Temperaturen unterhalb 50° C mindestens 1 Jahr.

Die Vorfabrikate werden dann auf die den gewünschten Formteilen entsprechende Größen zugeschnitten und mit einer wäßrigen Lösung von Hexamethylentetramin (30%ig) bei einer Dosierung von 50 g/m² besprüht. Hierauf werden sie 30 Sekunden mit Naßdampf behandelt und unmittelbar danach ohne nennenswerte Verdichtung bei 140° C mechanisch tiefgezogen, d. h. der vorgesehenen räumlichen Endform angenähert. Der Tiefziehprozeß verläuft bei den mit Phenolharz A) hergestellten Matten ohne Ausdünnung oder Risse in den exponierten Zonen. Die Verdichtung in die Endformen erfolgt im Anschluß mit Hilfe von Preßwerkzeugen bei 170 bis 200° C und einem Druck von 3 N/mm in 25 Sekunden.

## Beispiel 2

100 T einer wäßrigen Holzfaserpülpe — wie in Beispiel 1 beschrieben — werden mit 20 T einer Harzlösung intensiv gemischt, die aus 1000 T Wasser und 5,9 T des Phenolharzes B) hergestellt wird. Durch Einstellung der Suspension auf einen pH-Wert von 3 mit Aluminiumsulfat-Lösung wird das Harz auf die Faser gefällt. Anschließend folgt die Bildung der Vliesmatten auf der Langsieb-Maschine, ihre Vorverdichtung in der Heizpresse und die Endtrocknung in der Kammer wie in Beispiel 1.

Nach dem Zuschnitt werden die vorfabrizierten Matten mit 30 g/m$^2$ einer 40%igen Formaldehyd-Lösung besprüht, mit Dampf behandelt und unmittelbar danach in der Formpresse bei 120°C tiefgezogen. Danach erfolgt die Härtung unter Pressen entsprechend der Behandlung in Beispiel 1.

## Vergleichsbeispiel 1
### (Einsatz eines Phenolresols)

100 T einer wäßrigen Holzfasersuspension, wie in Beispiel 1 beschrieben, werden mit 20 T einer Harzlösung gemischt, die aus 1000 T Wasser und 6,3 T Phenolharz C hergestellt wird. Durch Zusatz von Aluminiumsulfatlösung wird die Aufschlämmung auf einen pH-Wert von 3 eingestellt, wobei das Harz auf die Faser gefällt wird. Anschließend erfolgt die Bildung der Vliesmatten wie im Beispiel 1 beschrieben, wobei die Endtrocknung auf einen Wassergehalt von 25% im Interesse der Tiefziehbarkeit nicht unterschritten werden darf; die zugeschnittenen Matten werden 30 Sekunden mit Naßdampf behandelt und wie in Beispiel 1 tiefgezogen und gehärtet.

## Vergleichsbeispiel 2
### (Einsatz von pulverförmigem Novolak; Trockenverfahren)

100 T Holzfaserstoff in Form des zerfaserten Materials mit einem Wassergehalt von 35% werden unmittelbar nach Verlassen des Defibrators im Vliesbildner mit 4,6 T Pulverharz D, das neben dem Novolak auch Hexamethylentetramin und Wurzelharz enthält, gemischt, zwischen Siebbändern auf einen Wassergehalt von 5% getrocknet und zu 10 mm starken Matten mit einer Dichte von 0,2 g/cm$^3$ vorverdichtet. Die Matten werden zugeschnitten, 30 Sekunden mit Naßdampf behandelt und sofort anschließend bei 140°C tiefgezogen. Die Vorformlinge werden dann, wie im Beispiel 1 beschrieben, in der Heißpresse gehärtet.

## Vergleichsbeispiel 3

Das Vergleichsbeispiel 2 wird mit dem Unterschied wiederholt, daß die Pulvermenge D auf 9 T erhöht wird.

## Vergleichsbeispiel 4

Das Vergleichsbeispiel 3 wird wiederholt; jedoch wird auf die Dekorseite des Formkörpers ein Papier, das schwach mit Phenolresolharz imprägniert wurde, während des Härtungsprozesses aufgepreßt.

In der nachfolgenden Tabelle werden die Vorteile der erfindungsgemäßen Formteile gegenüber den Vergleichsbeispielen herausgestellt.

Bei der Tiefziehbarkeit werden die Werte angegeben, bis zu denen eine einwandfreie Verformung erzielt werden kann, ohne daß Ausdünnungen oder Risse in den exponierten Zonen auftreten. Aus der Tabelle geht hervor, daß Formkörper, die unter Einsatz von Phenolresolharz mit etwa gleichem Bindemittelgehalt in der Gesamttrockenmasse hergestellt worden sind, nur eine sehr geringe Tiefziehbarkeit aufweisen; darüber hinaus ist die Lagerfähigkeit bei 23°C der Vorfabrikate ungenügend. Der Einsatz von pulverförmigen Novolakharzmischungen ergibt bei gleich großem Bindemittelgehalt der Gesamttrockenmasse eine geringe Tiefziehbarkeit der Formkörper; außerdem zeigt sich, daß die aufgebrachte Lackschicht auf dem Formkörper nicht haftet, ihr Verlauf mangelhaft ist und Kraterbildung auftritt. Eine Verdopplung des Bindemittelgehalts der Gesamttrockenmasse erhöht zwar die Tiefziehbarkeit derartiger Formkörper, jedoch ist die Lackierbarkeit nach wie vor unenügend. eine Kaschierung der Formkörper, die mit einem erhöhten Bindemittelgehalt an pulverförmigen Novolak hergestellt worden sind, mit einem Papier, das mit Phenolresolharz imprägniert ist, verbessert zwar die Lackierbarkeit der Formkörper auf einen bisher in der Praxis tolerierbaren Wert, jedoch stehen die Werte für Haftung und Verlauf gegenüber denen bei erfindungsgemäßen Formkörpern deutlich zurück.

Tabelle

| | Beispiel | | Vergleich | Vergleich | Vergleich | Vergleich |
|---|---|---|---|---|---|---|
| | 1 | 2 | 1 | 2 | 3 | 4 |
| Harz | A | B | C | D | D | D |
| Tiefziehbarkeit [mm/20 mm Strecke] | 60 | 50 | 9 | 20 | 50 | 50 |
| Lagerfähigkeit bei 23°C | >1 Jahr | >1 Jahr | 1 Woche | >1 Jahr | >1 Jahr | >1 Jahr |
| Lackierbarkeit mit Nitrolack | | | | | | |
| Haftung | gut | gut | gut | keine | keine | ausreichend |
| Verlauf | störungsfrei | störungsfrei | störungsfrei | mangelhaft Kraterbildung | mangelhaft Kraterbildung | befriedigend |
| Bindemittelgehalt der Gesamttrockenmasse [%] | 6,3 | 5,0 | 5,6 | 6,6 | 12,2 | 12,2 |

**Patentansprüche**

1. Mehrstufiges Verfahren zur Herstellung von stark profilierten Formteilen, bei dem in einer ersten Stufe weitgehend entwässerte, verformbare und schwach verdichtete, nach einem Naßverfahren mit Hilfe von wäßrigen Phenol-Formaldehyd-Harz-Lösungen oder -Dispersionen hergestellte Fasermatten, insbesondere Holzfasermatten, vorfabriziert werden, wobei die Harze durch Säuren oder sauer wirkende Verbindung auf den Fasern abgeschieden werden, und bei dem diese Fasermatten in einer zweiten Stufe mit Wärme und Feuchtigkeit behandelt, verformt und abschließend durch Heißpressen gehärtet werden, dadurch gekennzeichnet, daß in der ersten Stufe die Fasermatten unter Verwendung von wäßrigen Novolak-Lösungen oder -Dispersionen hergestellt und bis auf einen Wassergehalt von weniger als 5% getrocknet werden und daß diese Matten in der zweiten Stufe mit einer wäßrigen Lösung eines Härtungsmittels besprüht und tiefgezogen werden.

2. Verfahren nach Anspruch 1, dadurch gekennzeichnet, daß Novolake mit Molverhältnissen der Phenole zu Formaldehyd von 1 : 0,5 bis 1 : 0,95, vorzugsweise 1 : 0,7 bis 1 : 0,9 eingesetzt werden.

3. Verfahren nach Anspruch 1 oder 2, dadurch gekennzeichnet, daß die Novolake in Form ihrer wäßrigen, alkalischen Lösungen mit einem pH-Wert über 8 eingesetzt werden.

4. Verfahren nach einem oder mehreren der Ansprüche 1 bis 3, dadurch gekennzeichnet, daß die Trocknung der vorfabrizierten Fasermatten in mehreren Stufen durchgeführt wird.

5. Verfahren nach einem oder mehreren der Ansprüche 1 bis 4, dadurch gekennzeichnet, daß die Temperatur bei der Vorverdichtung in der Heizpresse 160 bis 200° C beträgt.

6. Verfahren nach einem oder mehreren der Ansprüche 1 bis 5, dadurch gekennzeichnet, daß die Trocknung in letzter Stufe mit einem Warmluftstrom, der eine Temperatur von 50 bis 90° C besitzt, durchgeführt wird.

7. Verfahren nach einem oder mehreren der Ansprüche 1 bis 6, dadurch gekennzeichnet, daß Schwefelsäure oder Aluminiumsulfat zur Fällung der Harze auf die Fasern eingesetzt werden.

8. Verfahren nach einem oder mehreren der Ansprüche 1 bis 7, dadurch gekennzeichnet, daß als Härtungsmittel Hexamethylentetramin eingesetzt wird.

9. Verfahren nach einem oder mehreren der Ansprüche 1 bis 8, dadurch gekennzeichnet, daß die Verdichtung und Härtung der tiefgezogenen Matten bei 150 bis 220, vorzugsweise 170 bis 200° C, erfolgt.

10. Verfahren nach einem oder mehreren der Ansprüche 1 bis 9, dadurch gekennzeichnet, daß die Verdichtung und Härtung von Holzfasermatten bei einem Druck von 2 – 5, vorzugsweise 2,5 – 3,5 N/mm², erfolgt.

## Claims

1. Multiple-stage process for the preparation of large-profiled moulded parts wherein in a first stage there are prefabricated largely drained, mouldable and low-compressed fiber mats, preferably wood fiber mats, which have been prepared in a wet process using aqueous solutions or dispersions of phenol formaldehyde resin, whereby the resins are precipitated on the fibres by means of acids or acidic compounds and wherein in a second stage said fiber mats are treated by means of heat and moisture, moulded and finally cured by heat-pressurizing, characterized in that in the first stage the fiber mats are prepared by use of aqueous solutions or dispersions of novolaks and are dried to a water content of less than 5% and that in the second stage said mats are subjected to spraying with an aqueous solution of a curing agent, and deep-drawn.

2. Process according to claim 1, characterized in that novolaks are applied with molar ratios of phenols to formaldehyde of from 1 : 0.5 to 1 : 0.95, preferably 1 : 0.7 to 1 : 0.9.

3. Process according to claim 1 or 2, characterized in that the novolaks are applied in the form of their aqueous alkaline solutions having a pH-value above 8.

4. Process according to one or more of claims 1 — 3, characterized in that the drying operation of the prefabricated fiber mats is completed in a plurality of stages.

5. Process according to one of more of claims 1 — 4, characterized in that the temperature inside of the heat press equipment during the precompressing step is from 100 to 200° C.

6. Process according to one or more of claims 1 — 5, characterized in that the drying operation of the last stage is accomplished by a stream of hot air having a temperature of from 50 to 90° C.

7. Process according to one or more of claims 1 — 6, characterized in that sulfuric acid or aluminium sulfate is employed to precipitate the resins on the fibers.

8. Process according to one or more of claims 1 — 7, characterized in that hexamethylene tetramine is employed as curing agent.

9. Process according to one or more of claims 1 — 8, characterized in that compression and curing of the deep-drawn mats is accomplished at 150 to 220, preferably at 170 to 200° C.

10. Process according to one or more of claims 1 — 9, characterized in that compression and curing of wood fiber mats is accomplished at a pressure of 2 to 5, preferably 2.5 to 3.5 N/mm².

## Revendications

1. Procédé en plusieurs stades pour produire des pièces moulées à profil très marqué, selon lequel on fabrique dans un premier stade, à titre de demi-produits, des mats fibreux, notamment des mats de fibres de bois, produits selon un procédé au mouillé à l'aide de solutions ou dispersions aqueuses de résines phénol-formaldéhyde dont on a éliminé l'eau dans une large mesure, qui sont déformables et faiblement comprimés, les résines étant précipitées sur les fibres par des acides ou par des composés à réaction acide, et l'on traite dans un second stade ces mats fibreux par la chaleur et l'humidité, on les façonne par moulage et finalement on les durcit par compression à chaud, procédé caractérisé en ce que, dans le premier stade, les mats fibreux sont fabriqués en utilisant des solutions ou dispersions aqueuses de novolaques et sont séchés jusqu'à une teneur en eau inférieure à 5% et en ce que, dans le second stade, ces mats sont aspergés d'une solution aqueuse d'un agent de durcissement et sont emboutis.

2. Procédé selon la revendication 1, caractérisé en ce qu'on utilise des novolaques présentant des rapports molaires entre les phénols et le formaldéhyde compris entre 1 : 0,5 et 1 : 0,95 et de préférence entre 1 : 0,7 et 1 : 0,9.

3. Procédé selon l'une des revendications 1 et 2, caractérisé en ce qu'on utilise les novolaques sous forme de leurs solutions alcalines aqueuses ayant un pH supérieur à 8.

4. Procédé selon l'une quelconque des revendications 1 à 3, caractérisé en ce que le séchage des mats fibreux obtenus comme sous-produits est réalisé en plusieurs stades.

5. Procédé selon l'une quelconque des revendications 1 à 4, caractérisé en ce que, lors de la compression préliminaire dans la presse chauffante, la température se situe entre 160° et 200° C.

6. Procédé selon l'une quelconque des revendications 1 à 5, caractérisé en ce que le séchage est effectué dans le dernier stade à l'aide d'un courant d'air chaud présentant une température de 50 à 90° C.

7. Procédé selon l'une quelconque des revendications 1 à 6, caractérisé en ce qu'on utilise de l'acide sulfurique ou du sulfate d'aluminium pour précipiter les résines sur les fibres.

8. Procédé selon l'une quelconque des revendications 1 à 7, caractérisé en ce qu'on utilise comme agent de durcissement l'hexaméthylènetétramine.

9. Procédé selon l'une quelconque des revendications 1 à 8, caractérisé en ce qu'on effectue la compression et le durcissement des mats emboutis à 150 à 220°, de préférence à 170 à 200° C.

10. Procédé selon l'une quelconque des revendications 1 à 9, caractérisé en ce qu'on effectue la compression et le durcissement des mats de fibres de bois sous une pression de 2 à 5 et de préférence 2,5 à 3,5 N/mm².